# EUROPÄISCHE PATENTSCHRIFT

(11) **EP 3 475 146 B1**
(45) Veröffentlichungstag und Bekanntmachung des Hinweises auf die Patenterteilung: **24.02.2021**
(21) Anmeldenummer: 17731903.5
(22) Anmeldetag: 22.06.2017
(51) Int. Cl.: B62D 5/04, F16H 25/22

(54) **KUGELGEWINDETRIEB EINER ELEKTROMECHANISCHEN SERVOLENKUNG MIT UMLENKKÖRPER FÜR EINE KUGELRÜCKFÜHRUNG**
BALL SCREW DRIVE OF AN ELECTROMECHANICAL POWER STEERING DEVICE WITH DEFLECTING BODIES FOR A BALL RETURN
MÉCANISME DE VIS-ÉCROU À BILLES D'UNE DIRECTION ASSISTÉE ÉLECTROMÉCANIQUE COMPORTANT DES CORPS DE DÉVIATION POUR UN RETOUR DES BILLES

(30) Priorität: 22.06.2016 DE 102016007542
(43) Veröffentlichungstag der Anmeldung: 01.05.2019
(73) Patentinhaber: thyssenkrupp Presta AG, 9492 Eschen (LI); thyssenkrupp AG, 45143 Essen (DE)
(72) Erfinder: ILLÉS, András, 9473 Gams (CH); RAITHER, Wolfram, 9470 Buchs (CH)
(74) Vertreter: thyssenkrupp Intellectual Property GmbH
(86) Internationale Anmeldenummer: PCT/EP2017/065358
(87) Internationale Veröffentlichungsnummer: WO 2017/220713

(56) Entgegenhaltungen:
- EP-A2- 1 596 100
- WO-A1-02/02390
- DE-A1-102007 049 114

## Beschreibung

Die vorliegende Erfindung betrifft eine elektromechanische Servolenkung mit den Merkmalen des Oberbegriffs des Anspruchs 1.

In elektromechanischen Servolenkungen wird über einen Elektromotor ein Drehmoment erzeugt, das auf ein Getriebe übertragen und dort das vom Fahrer eingeleitete Lenkmoment überlagert.

Eine gattungsgemäße elektromechanische Servolenkung weist einen Servomotor auf, der auf eine Kugelmutter eines Kugelgewindetriebs wirkt. Die Kugelmutter steht über umlaufende Kugeln mit einem Kugelgewinde in Eingriff, welches am äußeren Umfang einer Zahnstange angeordnet ist, die Teil einer Zahnstangenlenkung ist. Eine Drehung der Kugelmutter bewirkt eine axiale Verlagerung der Zahnstange, wodurch eine Lenkbewegung des Fahrers unterstützt wird. Bevorzugt ist der Kugelgewindetrieb über einen Zahnriemen mit dem Elektromotor gekoppelt.

Die EP 1 659 312 B1 offenbart einen Kugelgewindetrieb, bei dem ein Umlenckörper offenbart ist, der die Kugeln über eine Kugelrückführung zurück in die Kugelmutter befördert. Der Umlenkkörper ist aus Kunststoff gefertigt und wird von außen in einen Grundkörper der Kugelmutter eingesteckt. Der Umlenkkörper steht dabei über den äußeren Umfang des metallischen Grundkörpers der Kugelmutter hinaus. Zur Befestigung des Umlenkkörpers in der Kugelmutter sind im Inneren des Zahnriemenrads Ausnehmungen vorgesehen.

Aus der Patentschrift EP 2 713 078 B1 ist ein Kugelgewindetrieb mit Kugelrückführung bekannt. Das Zahnriemenrad weist auf der Innenseite eine Ausnehmung zur Aufnahme der Kugelrückführung und zwei Stege als Verdrehsicherung auf.

Aus der EP 1 596 100 A2, die die Merkmale des Oberbegriffs des unabhängigen Anspruchs 1 offenbart, ist ein Kugelgewindetrieb für eine Servolenkung bekannt, bei dem ein Rückführungskanal der Kugelrückführung durch den Umlenkkörper und eine Riemenscheibe gebildet ist. Nachteilig daran ist, dass die Drehmomentübertragung unzureichend sein kann. Dieses Problem tritt gleichfalls bei dem in der DE 10 2007 049 114 A1 beschriebenen Zahnriemenrad mit Kugelgewindemutter auf.

Es ist Aufgabe der vorliegenden Erfindung eine elektromechanische Servolenkung mit einem Kugelgewindetrieb anzugeben, bei dem die Drehmomentübertragung verbessert ist.

Diese Aufgabe wird von einer elektromechanischen Servolenkung mit den Merkmalen des Anspruchs 1 gelöst. Weitere vorteilhafte Ausführungen der Erfindung sind den Unteransprüchen zu entnehmen.

Demnach ist eine elektromechanische Servolenkung für ein Kraftfahrzeug, mit einem Servomotor, der ein axial verlagerbares Bauelement über eine in einem Gehäuse um eine Längsachse drehbar in einem Lager gelagerte Kugelmutter antreibt, vorgesehen, wobei die Kugelmutter mit einer an dem Bauelement ausgebildeten Gewindespindel in Eingriff steht und auf Ihrer Innenseite ein Kugelgewinde zum Abwälzen von Kugeln aufweist, und mit einer externen Kugelrückführung, die den Anfang des Kugelgewindes mit dem Ende des Kugelgewindes verbindet, um ein endloses Umlaufen der Kugeln zu ermöglichen, und mit einem Umlenkkörper, wobei ein Rückführungskanal der Kugelrückführung durch den Umlenkkörper und eine Riemenscheibe gebildet ist, wobei der Umlenkkörper auf seiner Außenseite wenigstens zwei Stege aufweist, die derart in die Riemenscheibe eingreifen, dass ein Drehmoment von der Riemenscheibe auf die Kugelmutter übertragbar ist.

Diese Anordnung ist besonders kompakt und kostengünstig, da die Riemenscheibe einen Teil des Rückführungskanals bildet. Zudem besteht die Riemenscheibe vorzugsweise aus einem gesinterten Riemenscheibenkörper, wodurch der Verschleiß der Kugelrückführung anders als bei Kunststoffteilen verringert ist.

Erfindungsgemäß weist der Umlenkkörper auf seiner Außenseite wenigstens zwei Stege auf, die derart in die Riemenscheibe eingreifen, dass ein Drehmoment von der Riemenscheibe auf die Kugelmutter übertragbar ist.

Weiterhin bevorzugt ist, dass der Umlenkkörper auf seiner Innenseite wenigstens zwei Stege aufweist, die im Betrieb in korrespondierende Ausnehmungen der Kugelmutter greifen und somit die Übertragung des Drehmomentes sicherstellen.

Vorzugsweise erstrecken sich die Stege in Längsrichtung. Dabei kann vorgesehen sein, dass die Stege der einen Seite und die Stege der anderen Seite zueinander in Längsrichtung versetzt angeordnet sind.

In einer bevorzugten Ausführungsform sind die Stege der Unterseite Schnappelemente und gehen mit der jeweiligen Ausnehmung der Kugelmutter eine Schnappverbindung ein.

Vorzugsweise sind die Stege einstückig aus einem einzigen Bauteil, bevorzugt integral aus einem einzigen Werkstoff gebildet mit dem Umlenkkörper ausgebildet.

Es kann weiterhin vorgesehen sein, dass der Umlenkkörper Zapfen zur Positionierung des Umlenkkörpers auf der Kugelmutter aufweist. Diese Zapfen greifen bevorzugt in Ausnehmungen der Kugelmutter, die für den Eintritt bzw. Austritt von Kugeln für die externe Rückführung zu dem gegenüberliegenden Ende des Kugelgewindes vorgesehen sind. Insbesondere können die Zapfen einen Zapfeneinlauf aufweisen, an dem die umzulenkenden Kugeln zuerst mit dem Umlenkkörper in Kontakt gelangen.

Vorzugsweise ist das Lager ein zweireihiges Schrägkugellager mit wenigstens einem Lagerinnenring und zwei Lageraußenringen, wobei die Riemenscheibe und der Umlenkkörper zwischen den Lageraußenringen angeordnet sind. Dadurch ergibt sich eine besonders kompakte Anordnung.

Um das Lager kippsteif auszugestalten, kann vorgesehen sein, dass die Kontaktwinkel des zweireihigen Schrägkugellagers so ausgewählt sind, dass sich ein Stützabstand größer Null ausbildet.

Es ist weiterhin vorteilhaft, wenn die zwei Lageraußenringe in einer Hülse aufgenommen sind, die in einem Lagersitz des Gehäuses angeordnet ist. Diese Hülse ist dabei bevorzugt so ausgestaltet, dass sie Wärmeausdehnungen zwischen dem Getriebegehäuse und der Kugelmutter kompensieren kann.

In einer bevorzugten Ausführungsform ist das Bauelement eine Zahnstange eines Zahnstangenlenkgetriebes ist.

Nachfolgend wird ein Ausführungsbeispiel der vorliegenden Erfindung anhand der Zeichnungen beschrieben. Gleiche Bauteile oder Bauteile mit gleichen Funktionen tragen gleiche Bezugszeichen. Es zeigen:
- Figur 1:: eine schematische Darstellung einer elektromechanischen Servolenkung mit Kugelgewindetrieb;
- Figur 2:: eine räumliche Darstellung eines erfindungsgemäßen Kugelgewindetriebs ohne das umschließende Gehäuse,
- Figur 3:: einen Längsschnitt durch den Kugelgewindetrieb,
- Figur 4:: eine teilweise Explosionsdarstellung des Schrägkugellagers entsprechend den Figuren 2 und 3,
- Figur 5:: eine teilweise Explosionsdarstellung des Kugelgewindetriebs mit Kugelrückführung entsprechend den Figuren 2 und 3,
- Figur 6:: eine räumliche Ansicht der Kugelmutter,
- Figur 7:: eine räumliche Darstellung der Kugelrückführung in Ansicht von oben,
- Figur 8:: eine räumliche Darstellung der Kugelrückführung in Ansicht von unten,
- Figur 9:: eine seitliche Ansicht des Kugelgewindetriebes,
- Figur 10:: einen Querschnitt durch den Kugelgewindetrieb entlang der Linie A-A, sowie
- Figur 11:: einen Querschnitt durch den Kugelgewindetrieb entlang der Linie B-B.

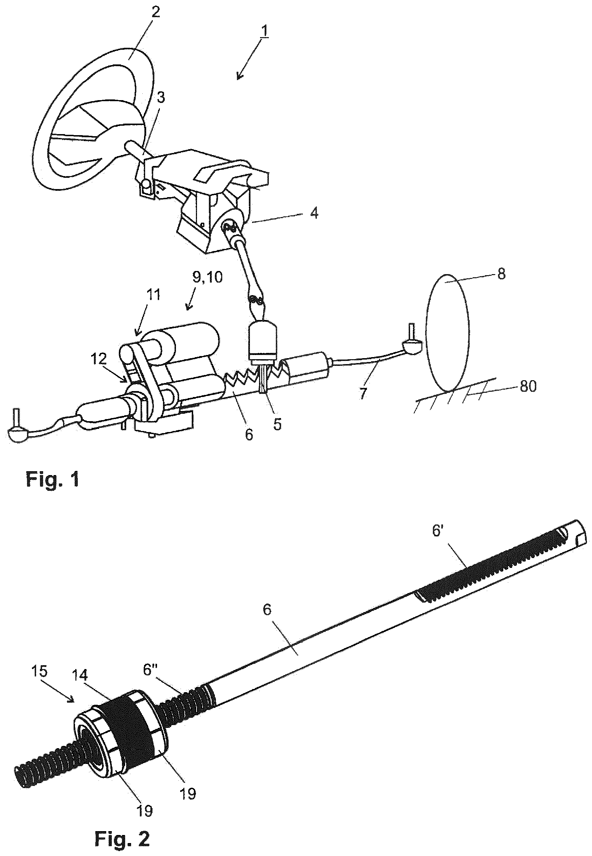

In der Figur 1 ist eine elektromechanische Kraftfahrzeuglenkung 1 mit einem Lenkrad 2, das mit einer oberen Lenkwelle 3 und einer unteren Lenkwelle 4 drehfest gekoppelt ist, schematisch dargestellt. Die obere Lenkwelle 3 steht über einen Torsionsstab in funktioneller Verbindung mit der unteren Lenkwelle 4. Die untere Lenkwelle 4 ist mit einem Ritzel 5 drehfest verbunden. Das Ritzel 5 kämmt in bekannter Weise mit einem Zahnsegment 6' einer Zahnstange 6. Die Zahnstange 6 ist in einem Lenkungsgehäuse in Richtung ihrer Längsachse verschieblich gelagert. An ihrem freien Ende ist die Zahnstange 6 mit Spurstangen 7 über nicht dargestellte Kugelgelenke verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3, 4 und des Ritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegen wirkt. Zum Verschwenken der Räder 8 ist folglich eine Kraft erforderlich, die ein entsprechendes Drehmoment am Lenkrad 2 erforderlich macht. Ein Elektromotor 9 einer Servoeinheit 10 ist vorgesehen, um den Fahrer bei dieser Lenkbewegung zu unterstützen. Dazu treibt der Elektromotor 9 über einen Riementrieb 11 eine Kugelmutter 13 eines Kugelgewindetriebs 12 an. Eine Drehung der Mutter versetzt die Gewindespindel des Kugelgewindetriebs 12, die Teil der Zahnstange 6 ist, in eine Axialbewegung, die letztlich eine Lenkbewegung für das Kraftfahrzeug bewirkt.

Auch wenn hier im Beispiel eine elektromechanische Servolenkung mit mechanischer Kopplung zwischen Lenkrad 2 und Lenkritzel 5 dargestellt ist, kann die Erfindung auch für Kraftfahrzeuglenkungen angewendet werden, bei denen keine mechanische Kopplung vorhanden ist. Derartige Lenksysteme sind unter dem Begriff Steer-by-Wire bekannt.

In der Figur 2 ist der Kugelgewindetrieb räumlich dargestellt. Eine Gewindespindel 6" ist Teil der Zahnstange 6 und beabstandet zu dem Zahnsegment 6' angeordnet. Die Kugelmutter 13 weist auf ihrer äußeren Umfangsfläche eine Riemenscheibe 14 auf.

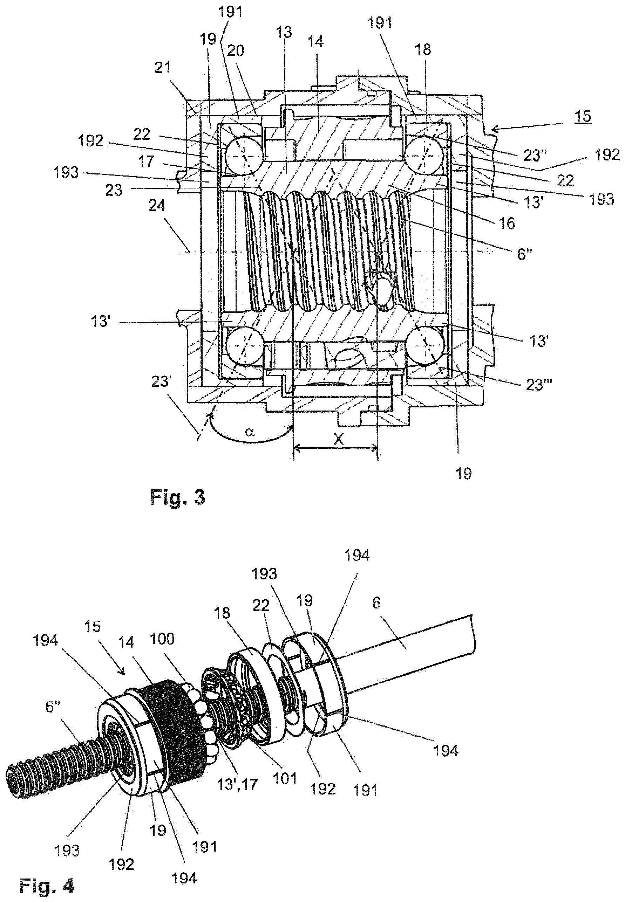

In Figur 3 sind die Kugelmutter 13 und die Gewindespindel 6" in einem Längsschnitt dargestellt. Die Kugelmutter 13 ist in einem zweireihigen Schrägkugellager 15 drehbar gelagert. Das Lager 15 weist einen einzigen gemeinsamen Innenring 16 auf, der durch die Kugelmutter 13 gebildet ist. Dazu weist die Kugelmutter 13 an ihren Enden 13' auf ihrer Außenumfangsfläche 16 jeweils eine umlaufende Ausnehmung 17 für eine Kugellaufbahn auf. Die Ausnehmung 17 bzw. das Laufbahnprofil ist dabei entsprechend einem Schrägkugellager ausgestaltet. Das Laufbahnprofil 17 und oder die Hülse des Schrägkugellagers kann als gotisches Profil ausgebildet sein, sodass ein Punktkontakt zwischen Laufbahn und Kugeln 100 entsteht Dadurch wird eine gleichmäßige Lastverteilung, eine hohe Steifigkeit sowie bessere Laufeigenschaften mit genauerer Führung ermöglicht. Bevorzugt haben die Kugeln einen Zweipunktkontakt zwischen der Ausnehmung 17 und der Hülse 19. Weiter bevorzugt kann zwischen den Enden 13' der Kugelmutter 13 und der Hülse ein Vierpunktkontakt vorliegen. Hierzu kann das Ende 13' der Kugelmutter als Trichterform ausgebildet sein.

Das Lager 15 weist weiterhin zwei separate Außenringe 18 auf. Die Außenringe 18 sind jeweils in einer separaten Hülse 19 aufgenommen, die in einem Lagersitz 20 des Gehäuses 21 angeordnet ist. Auf der Kugelmutter 13 ist die Riemenscheibe 14 des Zahnriemenantriebs 11 drehfest befestigt. Die Hülse 19 wird bevorzugt aus einem Werkstoff gebildet, der eine größere Wärmeausdehnung als Aluminium und Stahl besitzt. Insbesondere ist die Hülse 19 bevorzugt aus einem Kunststoff, besonders bevorzugt aus PA66GF30 (Polyamid 66 mit Glasfaserverstärkung mit 30% Volumenanteil) gebildet. Sie ist bevorzugt aus Kunststoff gefertigt und kompensiert Wärmeausdehnungen zwischen dem Getriebegehäuse 21 und dem Kugelmuttertrieb 12. Bevorzugt umfasst die Hülse eine kreiszylindrische Umfangswand 191, die das Lager 15 und die Lagerachse 24 umschließt, und einen kreiszylindrischen Bodenbereich 192, der sich radial nach Innen in Richtung der Lagerachse 24 erstreckt und eine kreiszylindrische Öffnung 193 aufweist, die die Lagerachse 24 umschließt. Die beiden separaten Hülsen 19 sind dabei bevorzugt derart angeordnet, dass die beiden Lager 15 zwischen den beiden Bodenbereiche 192 angeordnet sind. Bevorzugt sind die Bodenbereiche 192 eben ausgebildet mit bevorzugt konstanter Dicke. Es ist aber auch denkbar und möglich, die Bodenbereiche gezielt mit Rillen, Gravuren oder Rippen oder einer Wellenform zu versehen, um beispielsweise die Schmierung und/oder die Wärmeeigenschaften gezielt zu beeinflussen.

Zur weiteren Verbesserung der Kompensationseigenschaften kann die Hülse in ihrer Umfangswand 191 Ausnehmungen, bevorzugt sich in Richtung der Lagerachse 24 erstreckende Schlitze 194 aufweisen. Diese Schlitze laufen bevorzugt zum bis ans offene Ende der Umfangswand 191, das vom Bodenbereich 192 weggerichtet ist. Mit anderen Worten sind die Schlitze 194 in Richtung der Riemenscheibe 14 geöffnet.

Die Hülse 19 ist bevorzugt einstückig aus einem einzigen Bauteil, bevorzugt integral aus einem einzigen Werkstoff gebildet, besonders bevorzugt in einem Spritzgussverfahren.

Wie in Figur 4 dargestellt, ist in der Hülse 19 in der bevorzugten Ausführungsform eine Wellfeder 22 angeordnet, die das Lager 15 in Axialrichtung vorspannt. Die Wellfeder 22 liegt zwischen Hülse 19 und Lageraußenring 18. Durch die Kombination von Hülse 19 und Wellfeder 22 lässt sich die Anbindungssteifigkeit einstellen. Zudem ermöglicht diese Kombination eine Dämpfung der Bewegung des Lagers 15 bei dynamischen Belastungen.

Je nach Anwendungsfall kann jedoch diese Wellfeder 22 durch eine Tellerfeder oder durch eine Kombination aus Tellerfeder und Wellfeder ersetzt werden.

Die Kugeln 100 des Schrägkugellagers 15 werden in einem Kugelkäfig 101 geführt.

Die Laufbahnen des zweireihigen Schrägkugellagers 15 sind so ausgeführt, dass die Verbindungslinien 23, 23', 23", 23"' der Berührungspunkte zwischen Kugel und Laufbahnen die Lagerachse 24 zwischen den Außenringen 18 liegend schneiden. Zwischen den beiden Schnittpunkten mit der Lagerachse 24 bildet sich ein vordefinierter Stützabstand X aus. Durch den großen Stützabstand X wird das Lager 15 besonders kippsteif. Für eine besonders hohe Kippsteifigkeit liegt der Stützabstand X bevorzugt in einem Intervall zwischen dem einfachen und dem dreifachen Durchmesser der Kugeln 100 des Schräglagers. Besonders zu bevorzugen ist ein Stützabstand der dem doppelten Durchmesser der Kugeln 100 des Schrägkugellagers entspricht. Die Auflagefläche der Kugel 100 auf der Laufbahnfläche 17 und einer inneren Fläche der Hülse entspricht bevorzugt einer viertel Kugelumfangsfläche. Es bleibt bevorzugt sowohl auf der Laufbahnfläche als auch auf der inneren Fläche der Hülse ein Hinterschnitt, welcher nicht von der Kugel berührt wird. Als Kontaktwinkel α wird der Winkel bezeichnet, den eine Verbindungslinie der beiden Berührungspunkte zwischen Kugel 100 und Laufbahnen mit der Radialebene einschließt und unter dem die Belastung von einer Laufbahn auf die andere übertragen wird. Bevorzugt ist der Kontaktwinkel für beide Reihen des Lagers 15 gleich groß. Mit einem vordefinierten Wert des Stützabstandes X lässt sich bei einem bestimmten Kontaktwinkel α die optimale Kippsteifigkeit des Lagers 15 einstellen.

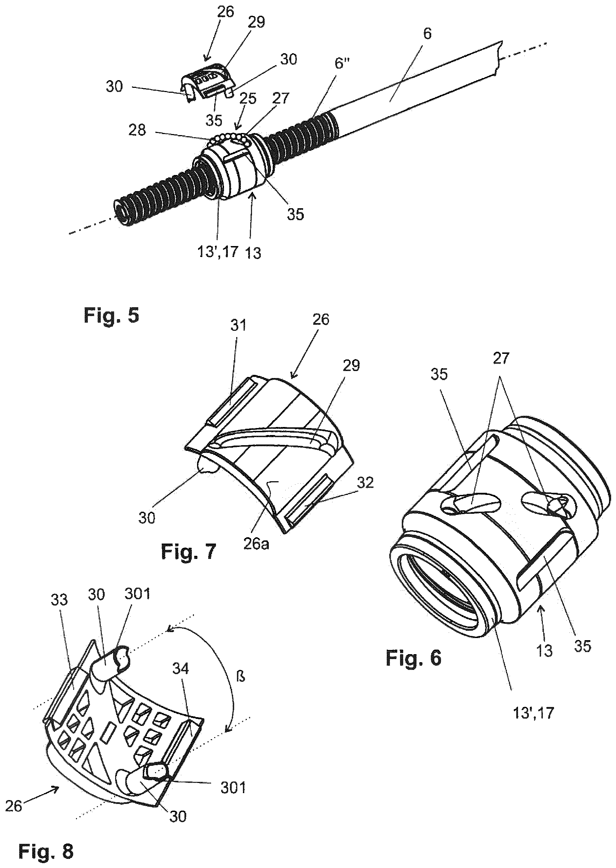

In den Figuren 5 bis 8 ist die Kugelmutter 13 und eine Kugelrückführung 25 im Detail dargestellt. Die Ausschnitte zeigen die Zahnstange 6 mit Kugelgewinde 6" und dem drauf angeordneten Kugelgewindetrieb ohne Riemenscheibe.

In der Figur 4 ist die Kugelmutter 13 mit aufgesetztem Umlenkkörper 26 gezeigt. Die Kugelmutter 13 trägt auf ihrer Innenseite ein Kugelgewinde, in dem sich in an sich bekannter Weise Kugeln abwälzen. Die Kugelmutter 13 weist zwei durchsetzende Ausnehmungen 27 auf. Jeweils eine Ausnehmung 27 ist für den Eintritt bzw. Austritt von Kugeln 28 für die externe Kugelrückführung zu dem gegenüberliegenden Ende des Kugelgewindes vorgesehen. Die Kugelrückführung 25, die die beiden Ausnehmungen 27 miteinander verbindet, wird zumindest teilweise durch den Umlenkkörper 26 gebildet. Die Kugelrückführung 25 ist U-förmig ausgebildet. Der Rückführungskanal wird zumindest teilweise durch eine Ausnehmung 29 in dem Umlenkkörper 26 und zwei daran anschließende Zapfen 30 gebildet. Die Zapfen weisen jeweils einen Zapfeneinlauf 301 auf. Die Ausnehmung 29 ist diagonal über den Umlenkkörper 26 angeordnet, der als Aufsatz auf seiner Innenseite an die Krümmung der Oberseite der Kugelmutter 13 angepasst ist und sich in Umfangsrichtung über einen begrenzten Sektor der Kugelmutter 13 erstreckt. Wie in Figur 5 gezeigt, wird der Umlenkkörper 26 mittels der Zapfen 30 in die beiden Ausnehmungen 27 der Kugelmutter 13 eingesetzt, so dass die Kugelrückführung 25 mit beiden Enden des Kugelgewindes verbunden ist.

Mit Vorzug sind die Zapfen 30 in einem Winkel β ausgerichtet, so dass die Zapfen 30 unter Vorspannung in die Ausnehmungen 27 eingefügt werden, wobei die Vorspannung den Zapfeneinlauf 301 in die Ausnehmung 27 vorspannt. Dadurch ist der Übergang der Kugeln 28 in den Rückführungskanal 25' verbessert. Insbesondere können dadurch die Anforderungen an die Herstelltoleranzen für den Umlenkkörper gesenkt werden.

Der Umlenkkörper kann auf der Oberseite und/oder auf der Unterseite mit wabenartigen Aussparungen oder Vertiefungen ausgebildet oder durchsetzt sein.

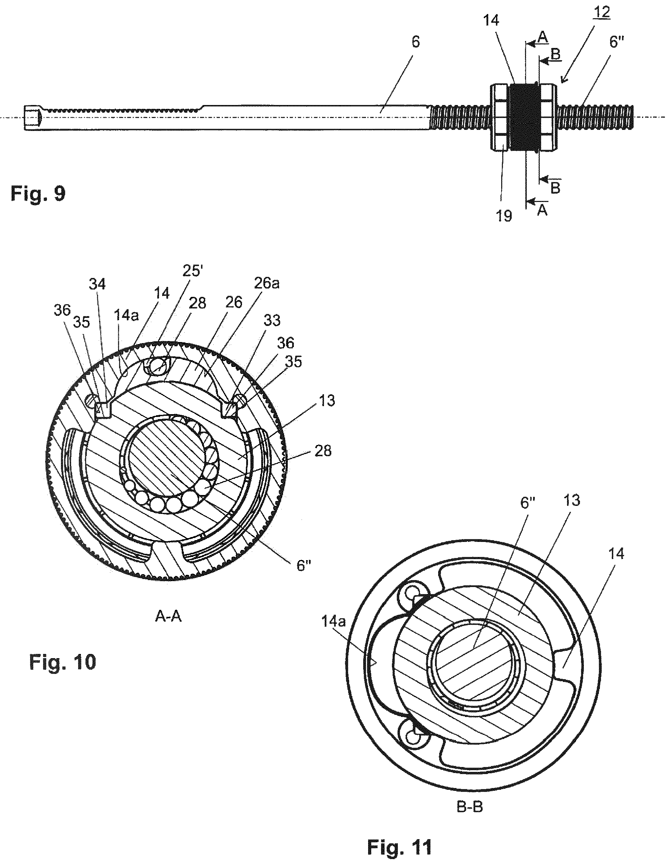

In den Figuren 6 bis 8 sind die Kugelmutter 13 und der aufgesetzte Umlenckörper 26 im Detail dargestellt. Neben den Zapfen 30 weist der Umlenkkörper 26 seitlich angeordnete Stege 31, 32, 33, 34 auf. Die Stege 31, 32, 33, 34 erstrecken sich in Längsrichtung 24 der Kugelmutter 13 und es sind jeweils auf der Oberseite zwei Stege 31, 32 und auf der Unterseite zwei Stege 33, 34 des Umlenkkörpers 26 angeordnet, die bevorzugt mit dem Umlenkkörper 26 einstückig ausgebildet sind. Die Stege der rechten Seite 31, 34 sind bevorzugt zu den Stegen der linken Seite 32, 33 in Längsrichtung 24 versetzt und bevorzugt punktsymmetrisch angeordnet. Bevorzugt ist der Umlenkkörper 26 aus Kunststoff gebildet, besonders bevorzugt aus PA66GF30 (Polyamid 66 mit Glasfaserverstärkung mit 30% Volumenanteil) gebildet. Die Stege der Unterseite 33, 34 greifen jeweils in dazu passende längliche Ausnehmung 35 in der Kugelmutter 13 ein. Diese Stege 33, 34 sind bevorzugt als Schnappelement ausgebildet und rasten in die Ausnehmung der Kugelmutter ein, wobei ein Formschluss durch elastische Verformung der Stege erreicht wird. Es kann vorgesehen sein, dass die Stege der Unterseite 33, 34 einen Winkel größer Null zueinander einnehmen, um dadurch eine bessere Vorspannung zu bilden. Die Stege auf der Oberseite 31, 32 greifen, wie in den Figuren 9 bis 11 dargestellt, in entsprechende Ausnehmungen 36 der Riemenscheibe 14 ein. Sie bilden eine Verdrehsicherung und eine Abstützung für die Riemenscheibe 14 mittels Formschluss. Eine Drehmomentübertragung von der Riemenscheibe auf die Kugelmutter erfolgt ausschließlich über die Stege 31, 32 und die korrespondierenden Ausnehmungen 36 in der Riemenscheibe 14, sowie der Bogenform in der Oberfläche 26a im Umlenkkörper 26 in Kontakt mit einer Ausbuchtung 14a der Riemenscheibe 14. Der Rückführungskanal 25' der Kugelrückführung 25 wird von dem Umlenkkörper 26 und der Innenseite der Riemenscheibe 14 und bevorzugt von der Ausbuchtung 14a gebildet. Die Ausnehmung 29 wird nach oben hin von der Riemenscheibe, insbesondere von deren Ausbuchtung 14a, abgedeckt, so dass sich ein geschlossener Rückführungskanal 25' ausbildet. Die Riemenscheibe weist dafür auf ihrer Innenseite ein entsprechendes Profil auf. Zwischen der Riemenscheibe 14 und der Kugelrückführung kann ein einteiliges aus einem einzigen Bauteil, bevorzugt integral aus einem einzigen Werkstoff gebildetes oder zweiteiliges Zwischenelement aus Kunststoff vorgesehen sein, welches am Außenumfang mit dem Profil auf der Innenseite der Riemenscheibe korrespondiert und dadurch axial gesichert ist. Der Rückführungskanal 25' wird durch die ballige Innenkontur des Zwischenelements aufgenommen und geschlossen. Dadurch können sich die Kugeln 28 entlang der U-förmigen Bahn bewegen und werden in dem Kanal gehalten. Mit dem Zwischenelement kann die Presspassung reduziert werden. Die Teilung des Rückführungskanals 25' zwischen dem Umlenkkörper 26 und der Hülse verläuft in der äußeren Berührebene der Kugeln 28. Bei der Montage wird als erstes der Umlenkkörper 26 auf die Kugelmutter 13 gesteckt und dann axial die Hülse auf die Kugelmutter 13 geschoben. Der Montageaufwand ist somit sehr gering. Durch die Verwendung der Riemenscheibe 14 als Teil des Rückführungskanals 25' wird die Anzahl der notwendigen Bauteile des Kugelgewindetriebs reduziert. Zudem ist die Oberfläche der Riemenscheibe mit der die Kugeln in dem Rückführungskanal in Kontakt kommen so hart und widerstandsfähig, dass der Verschleiß minimiert wird, was die Lebensdauer der Rückführung deutlich erhöht.

Durch die Anordnung der Stege kann der Zusammenbau der Riemenscheibe und der Kugelmutter mit spielfreiem Sitz ohne Presspassung erfolgen. Das hat den Vorteil, dass die Kugelmutter durch den Fügevorgang nicht nachteilig verformt wird.

Das Lager 15 der Kugelmutter 13 ist so ausgestaltet, dass der Umlenkkörper 26 zwischen Kugelmutter und Riemenscheibe angeordnet werden kann. Die Kugelrückführung bzw. der Umlenkkörper findet somit Platz innerhalb des zweireihigen Lagers, wodurch die Anordnung besonders kompakt wird.

## Patentansprüche

1. Elektromechanische Servolenkung (1) für ein Kraftfahrzeug, mit einem Servomotor (9), der ein axial verlagerbares Bauelement (6) über eine in einem Gehäuse (21) um eine Längsachse drehbar in einem Lager (15) gelagerte Kugelmutter (13) antreibt, wobei die Kugelmutter (13) mit einer an dem Bauelement (6) ausgebildeten Gewindespindel (6') in Eingriff steht und auf ihrer Innenseite ein Kugelgewinde zum Abwälzen von Kugeln (28) aufweist, und mit einer externen Kugelrückführung (25), die den Anfang des Kugelgewindes mit dem Ende des Kugelgewindes verbindet, um ein endloses Umlaufen der Kugeln (28) zu ermöglichen, und mit einem Umlenkkörper (26), wobei ein Rückführungskanal (25') der Kugelrückführung (25) durch den Umlenkkörper (26) und eine Riemenscheibe (14) gebildet ist, **dadurch gekennzeichnet, dass** der Umlenkkörper (26) auf seiner Außenseite wenigstens zwei Stege (31, 32) aufweist, die derart in die Riemenscheibe (14) eingreifen, dass ein Drehmoment von der Riemenscheibe (14) auf die Kugelmutter (13) übertragbar ist.

2. Elektromechanische Servolenkung nach Anspruch 1, **dadurch gekennzeichnet, dass** der Umlenkkörper (26) auf seiner Innenseite wenigstens zwei Stege (33, 34) aufweist, die im Betrieb in korrespondierende Ausnehmungen (35) der Kugelmutter (13) greifen.

3. Elektromechanische Servolenkung nach Anspruch 1 oder 2, **dadurch gekennzeichnet, dass** die Stege (31, 32, 33, 34) sich in Längsrichtung (24) erstrecken.

4. Elektromechanische Servolenkung nach einem der vorhergehenden Ansprüche 1 bis 3, **dadurch gekennzeichnet, dass** die Stege der einen Seite (31, 34) und die Stege der anderen Seite (32, 33) zueinander in Längsrichtung versetzt angeordnet sind.

5. Elektromechanische Servolenkung nach einem der vorhergehenden Ansprüche 1 bis 4, **dadurch gekennzeichnet, dass** die Stege der Unterseite (33, 34) Schnappelemente sind und mit der jeweiligen Ausnehmung (35) der Kugelmutter (13) eine Schnappverbindung eingehen.

6. Elektromechanische Servolenkung nach einem der vorhergehenden Ansprüche 1 bis 5, **dadurch gekennzeichnet, dass** die Stege (31, 32, 33, 34) einstückig mit dem Umlenkkörper (26) ausgebildet sind.

7. Elektromechanische Servolenkung nach einem der vorhergehenden Ansprüche, **dadurch gekennzeichnet, dass** der Umlenkkörper (26) Zapfen (30) zur Positionierung des Umlenkkörpers (26) auf der Kugelmutter (13) aufweist.

8. Elektromechanische Servolenkung nach einem der vorhergehenden Ansprüche, **dadurch gekennzeichnet, dass** die Kugelmutter (13) zwei Ausnehmungen (27) für den Eintritt bzw. Austritt von Kugeln (28) für die externe Rückführung zu dem gegenüberliegenden Ende des Kugelgewindes aufweist.

9. Elektromechanische Servolenkung nach Ansprüchen 7 und 8, **dadurch gekennzeichnet, dass** die Zapfen (30) des Umlenkkörpers (26) in die Ausnehmungen (27) der Kugelmutter (13) eingreifen.

10. Elektromechanische Servolenkung nach einem der vorhergehenden Ansprüche, **dadurch gekennzeichnet, dass** das Lager (15) ein zweireihiges Schrägkugellager mit wenigstens einem Lagerinnenring (16) und zwei Lageraußenringen (18) ist, wobei die Riemenscheibe (14) und der Umlenkkörper (26) zwischen den Lageraußenringen (18) angeordnet ist.

11. Elektromechanische Servolenkung nach Anspruch 10, **dadurch gekennzeichnet, dass** die Kontaktwinkel (α) des zweireihigen Schrägkugellagers (15) so ausgewählt sind, dass sich ein Stützabstand (X) ausbildet.

12. Elektromechanische Servolenkung nach Anspruch 10 oder 11, **dadurch gekennzeichnet, dass** die zwei Lageraußenringe (18) in einer Hülse (19) aufgenommen sind, die in einem Lagersitz (20) des Gehäuses (21) angeordnet ist.

13. Elektromechanische Servolenkung nach Anspruch 12, **dadurch gekennzeichnet, dass** die Hülse (19) derart ausgestaltet ist, Wärmeausdehnungen zwischen dem Getriebegehäuse (21) und der Kugelmutter (13) zu kompensieren.

14. Elektromechanische Servolenkung nach einem der vorhergehenden Ansprüche, **dadurch gekennzeichnet, dass** das Bauelement (6) eine Zahnstange eines Zahnstangenlenkgetriebes ist.

## Claims

1. An electromechanical power steering device (1) for a motor vehicle, with a servomotor (9) which drives an axially movable component (6) via a ball nut (13) which is mounted in a bearing (15) such that it can be rotated about a longitudinal axis in a housing (21), the ball nut (13) being in engagement with a threaded spindle (6') which is configured on the component (6), and having a ball screw on its inner side for balls (28) to roll on, and with an external ball return means (25) which connects the start of the ball screw to the end of the ball screw, in order to make an endless circulation of the balls (28) possible, and with a deflecting body (26), **characterized in that** the deflecting body (26) has at least two webs (31, 32) on its outer side, which at least two webs (31, 32) engage into the pulley wheel (14) in such a way that a torque can be transmitted from the pulley wheel (14) to the ball nut (13).

2. The electromechanical power steering device as claimed in claim 1, **characterized in that** the deflecting body (26) has at least two webs (33, 34) on its inner side, which at least two webs (33, 34) engage in operation into corresponding recesses (35) of the ball nut (13).

3. The electromechanical power steering device as claimed in claim 1 or 2, **characterized in that** the webs (31, 32, 33, 34) extend in the longitudinal direction (24).

4. The electromechanical power steering device as claimed in one of the preceding claims 1 to 3, **characterized in that** the webs of the one side (31, 34) and the webs of the other side (32, 33) are arranged offset with respect to one another in the longitudinal direction.

5. The electromechanical power steering device as claimed in one of the preceding claims 1 to 4, **characterized in that** the webs of the underside (33, 34) are snap-action elements and enter into a snap-action connection with the respective recess (35) of the ball nut (13).

6. The electromechanical power steering device as claimed in one of the preceding claims 1 to 5, **characterized in that** the webs (31, 32, 33, 34) are configured in one piece with the deflecting body (26).

7. The electromechanical power steering device as claimed in one of the preceding claims, **characterized in that** the deflecting body (26) has pins (30) for positioning the deflecting body (26) on the ball nut (13).

8. The electromechanical power steering device as claimed in one of the preceding claims, **characterized in that** the ball nut (13) has two recesses (27) for the entry and exit of balls (28) for the external return to the opposite end of the ball screw.

9. The electromechanical power steering device as claimed in the preceding claims 7 and 8, **characterized in that** the pins (30) of the deflecting body (26) engage into the recesses (27) of the ball nut (13).

10. The electromechanical power steering device as claimed in one of the preceding claims, **characterized in that** the bearing (15) is a double-row angular contact ball bearing with at least one bearing inner ring (16) and two bearing outer rings (18), the pulley wheel (14) and the deflecting body (26) being arranged between the bearing outer rings (18).

11. The electromechanical power steering device as claimed in claim 10, **characterized in that** the contact angles (α) of the double-row angular contact ball bearing (15) are selected in such a way that a supporting spacing (X) is configured.

12. The electromechanical power steering device as claimed in claim 10 or 11, **characterized in that** the two bearing outer rings (18) are received in a sleeve (19) which is arranged in a bearing seat (20) of the housing (21).

13. The electromechanical power steering device as claimed in claim 12, **characterized in that** the sleeve (19) is configured in such a way as to compensate for thermal expansions between the mechanism housing (21) and the ball nut (13).

14. The electromechanical power steering device as claimed in one of the preceding claims, **characterized in that** the component (6) is a rack of a rack and pinion steering mechanism.

## Revendications

1. Direction assistée électromécanique (1) pour un véhicule automobile, comportant un servomoteur (9) qui entraîne un composant (6) déplaçable axialement par le biais d'un écrou à billes (13) monté dans un palier (15) de manière à pouvoir tourner autour d'un axe longitudinal dans un carter (21), dans lequel l'écrou habille (13) est en prise avec une broche filetée (6') formée sur le composant (6) et comprend, sur son côté intérieur, un filetage à billes pour le roulement de billes (28), et comportant un moyen de retour de billes externe (25) qui relie le début du filetage à billes à l'extrémité du filetage à billes, afin de permettre une circulation sans fin des billes (28), et comportant un corps de déviation (26), dans lequel un canal de retour (25') du moyen de retour de billes (25) est formé par le corps de déviation (26) et une poulie à courroie (14), **caractérisée en ce que** le corps de déviation (26) comprend au moins deux nervures (31, 32) sur son côté extérieur, lesquelles viennent en prise dans la poulie à courroie (14) de telle sorte qu'un couple puisse être transmis de la poulie à courroie (14) à l'écrou à billes (13).

2. Direction assistée électromécanique selon la revendication 1, **caractérisée en ce que** le corps de déviation (26) comprend au moins deux nervures (33, 34) sur son côté intérieur, lesquelles viennent en prise dans des évidements correspondants (35) de l'écrou à billes (13) lors du fonctionnement.

3. Direction assistée électromécanique selon la revendication 1 ou 2, **caractérisée en ce que** les nervures (31, 32, 33, 34) s'étendent dans la direction longitudinale (24).

4. Direction assistée électromécanique selon l'une des revendications précédentes 1 à 3, **caractérisée en ce que** les nervures de l'un des côtés (31, 34) et les nervures de l'autre côté (32, 33) sont décalées les unes par rapport aux autres dans la direction longitudinale.

5. Direction assistée électromécanique selon l'une des revendications précédentes 1 à 4, **caractérisée en ce que** les nervures du côté inférieur (33, 34) sont des éléments d'encliquetage et réalisent une liaison par encliquetage avec l'évidement respectif (35) de l'écrou à billes (13).

6. Direction assistée électromécanique selon l'une des revendications précédentes 1 à 5, **caractérisée en ce que** les nervures (31, 32, 33, 34) sont formées d'une seule pièce avec le corps de déviation (26).

7. Direction assistée électromécanique selon l'une des revendications précédentes, **caractérisée en ce que** le corps de déviation (26) comprend des goupilles (30) pour le positionnement du corps de déviation (26) sur l'écrou à billes (13).

8. Direction assistée électromécanique selon l'une des revendications précédentes, **caractérisée en ce que** l'écrou à billes (13) comprend deux évidements (27) pour l'entrée ou la sortie de billes (28) pour le retour externe à l'extrémité opposée du filetage à billes.

9. Direction assistée électromécanique selon les revendications 7 et 8, **caractérisée en ce que** les goupilles (30) du corps de déviation (26) viennent en prise dans les évidements (27) de l'écrou à billes (13).

10. Direction assistée électromécanique selon l'une des revendications précédentes, **caractérisée en ce que** le palier (15) est un palier à billes à contact oblique à deux rangées comportant au moins une bague de palier intérieure (16) et deux bagues de palier extérieures (18), la poulie à courroie (14) et le corps de déviation (26) étant disposés entre les bagues de palier extérieures (18) .

11. Direction assistée électromécanique selon la revendication 10, **caractérisée en ce que** l'angle de contact (α) du palier à billes à contact oblique à deux rangées (15) est sélectionné de telle sorte qu'une distance de support (X) soit formée.

12. Direction assistée électromécanique selon la revendication 10 ou 11, **caractérisée en ce que** les deux bagues de palier extérieures (18) sont logées dans une douille (19) qui est disposée dans un logement de palier (20) du carter (21).

13. Direction assistée électromécanique selon la revendication 12, **caractérisée en ce que** la douille (19) est configurée de manière à compenser des dilatations thermiques entre le carter de mécanisme (21) et l'écrou à billes (13).

14. Direction assistée électromécanique selon l'une des revendications précédentes, **caractérisée en ce que** le composant (6) est une crémaillère d'un mécanisme de direction à crémaillère.
